# EUROPEAN PATENT SPECIFICATION

(11) **EP 2 910 157 B1**
(45) Date of publication and mention of the grant of the patent: **31.10.2018**
(21) Application number: 15155600.8
(22) Date of filing: 18.02.2015
(51) Int. Cl.: A47J 36/02, A47J 27/00

(54) **Vessel for cooking food with anti-deformation bottom**
Behälter zum Kochen von Nahrungsmitteln mit verformungsbeständigem Boden
Récipient pour la cuisson d'aliments avec fond anti-déformation

(30) Priority: 21.02.2014 IT MI20140253
(43) Date of publication of application: 26.08.2015
(73) Proprietor: BALLARINI PAOLO & FIGLI S.p.A., 46017 Rivarolo Mantovano (MN) (IT)
(72) Inventor: Ferron, Jacopo, 26041 Casalmaggiore (CR) (IT); Ferron, Francesco, 26041 Casalmaggiore (CR) (IT)
(74) Representative: Ottazzo, Marco Francesco Agostino

(56) References cited:
- JP-A- 2006 000 357
- KR-A- 20090 090 555

## Description

The present finding refers to a vessel for cooking food for conventional or induction surfaces, the latter being the main target of the invention.

It is known that aluminum cooking vessels are not suitable for use on induction cooking surfaces, given that such metal is non-magnetic and hence does not cause interferences with the magnetic flows created by the inductors of said cooking surfaces.

Only metals with ferromagnetic structure can interact with such magnetic flows.

Also austenitic stainless steels, such as nickel-chrome 18/10 stainless steel known as AISI 304, being non-magnetic, have a behavior analogous to aluminum.

In order to have magnetic interferences, ferrous material should be used; iron in particular is particularly suitable, like other carbon steels with ferritic structure.

The technique used for making an aluminum cooking utensil suitable for induction surfaces is that of coupling it with a ferritic stainless steel plate, positioned on the external bottom of the container.

A widespread method provides for the application of a ferritic stainless steel perforated disc/plate on an aluminum pot. This joining occurs by subjecting the two parts to be joined together to strong pressure, but at room temperature, in a manner such that the aluminum (which is the much more malleable of the two metals) penetrates into holes made on the ferritic stainless steel element, filling them completely, and from these it at least partially exits outward. Upon completed joining, the holes have axis aligned with the axis of the pot.

The fixing to the aluminum bottom of the pot is ensured by the riveting of the aluminum that exited from the holes, in a manner such that a rivet-like head is formed.

The riveted aluminum provides a perfect coupling between the bottom and the part made of aluminum.

Nevertheless, during the use of the vessel, a deformation of the bottom is encountered that is greater than that encounterable in the presence of a bottom made only of aluminum.

Indeed, the expansion of the ferritic steel plate/disc due to the heating is about half the expansion of the aluminum given the same thermal conditions. This signifies that the aluminum part is curved on top of the ferritic plate/disc, since it has a greater expansion. This phenomenon causes a convexity of the bottom; inside the vessel, the central part of the bottom of the pot is moved away from the cooking surface.

This is unsuitable, since the possible cooking surface oil tends to move to and accumulate on the inner edge of the pot.

In addition, and what is even more serious, if the pot or pan is arranged on a conventional electric cooking surface, or glass ceramic cooking surface, it loses contact with the cooking surface, considerably worsening the thermal transmission and the efficiency.

Document JP-A-2006 000357 (see Figure 2) discloses a vessel for cooking foods on induction or conventional hobs, comprising a shaped body 1 with a surface that defines a volume for containing the food during cooking and a metal element 2 positioned on the base of the vessel, the metal element 2 having a plurality of parts 7 recessed with respect to said support surface 10 in which through holes 5 are produced, the recessed parts 7 of the metal element 2 being housed inside seats of the shaped body 1, said holes 5 containing therein a portion 3 of the shaped body 1 in the shape of a mushroom so as to project from the hole 5 and cover the perimeter thereof, so as to constrain the metal element 2 to the shaped body 1. There is clearance between the walls defining said holes 5 and the stems of said mushrooms 3, in order to accommodate differences of heat expansion between the body 1 and the metal element 2.

Object of the present finding is to fix, in a very stable manner, a metal element e.g. made of stainless steel, to a shaped body e.g. made of aluminum, limiting however the bending of the bottom to that normally present in monometallic items - which therefore ensures a correct efficiency. These and other objects are attained by obtaining a vessel according to the technical teachings of the enclosed claims.

Further characteristics and advantages of the finding will be evident from the description of a preferred but not exclusive embodiment of the vessel, illustrated as a non-limiting example in the enclosed drawings, in which:
figure 1 is a cross section view, taken along the line 1-1 of figure 2 and figure 5, of a part of the vessel according to the present finding;
figure 2 is a bottom view of the part of the vessel represented in the section of figure 1;
figure 3 is a section taken along the line 3-3 of figure 1;
figure 4 is a section view of the same part represented in figure 1, before an assembly process;
figure 5 is a bottom view to a vessel according to the present innovation.

With reference to the abovementioned figures, a vessel for cooking food on induction or conventional surfaces is shown overall with the reference number 1.

The vessel 1 comprises a shaped body 2 provided with a surface that defines a volume for containing food, during cooking.

It is preferably made of aluminum or another malleable material suitable for cooking.

As known, aluminum is not suitable for use on induction surfaces. It is in fact non-magnetic.

Therefore, in order to make the vessel usable also on such surfaces, the shaped body is coupled to a metal element 3 preferably made of a ferromagnetic material (e.g. ferritic stainless steel) arranged on the bottom of the vessel.

It is observed that the metal element fixed to the shaped body can also be made of a non-ferromagnetic metal.

In this case, the presence of the metal element is explained by the need to have a protection element for the shaped body, perhaps made of a material more resistant to impact or less subject to abrasion and scratches, in order to make the bottom of the vessel strong and durable. In addition, the metal element (made of non-ferromagnetic material) can improve the characteristics of contact with the glass ceramic surfaces of the electric surfaces.

The present finding is related to a system for constraining the shaped body and the metal element, made in a manner such to lessen the sliding (at least radial) of the bottom of the shaped body on the metal element that expands less (about half if the metal element is made of ferritic stainless steel and the shaped body is made of aluminum).

In the described embodiment, the metal element defines a support surface a of the vessel, and has a plurality of parts 4 that are recessed with respect to the support surface.

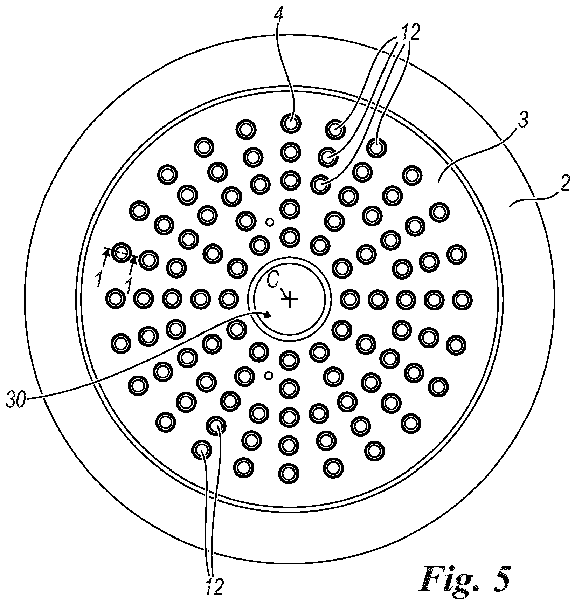

It is seen in figure 5 that the recessed parts 4 are substantially recesses with circular plan of frustoconical shape.

It is seen in the figures that the recessed parts have a first edge 5 (which in reality is connected), made flush with the surface a, while on the bottom of each recessed part a further edge 6 (also connected) is present. The first and the second edge are connected by a tilted wall which in the described embodiment has frustoconical shape. A hole F is made at a smaller, substantially circular base of the frustoconical element.

The recessed parts can be obtained via preforming of sheet metal, and the holes are made at the same time as the preforming, by means of cutting.

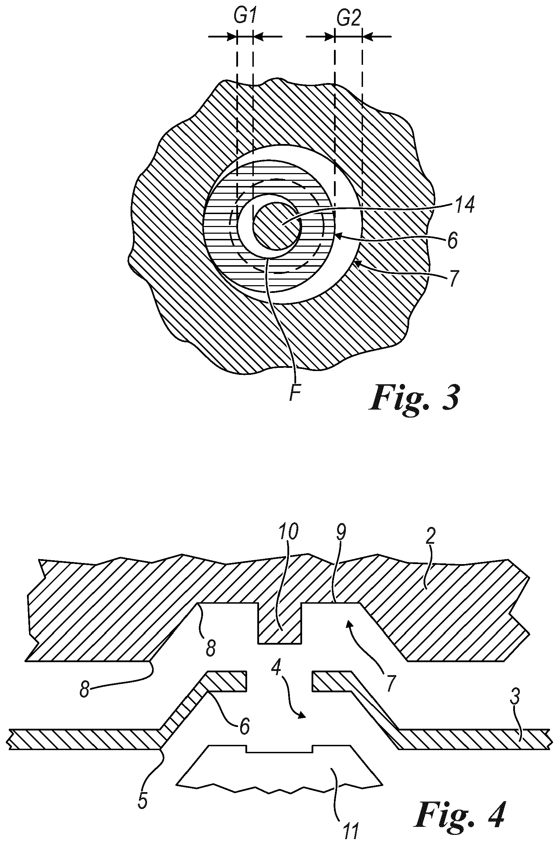

Alternatively, the recessed parts can be obtained during the riveting step with a punch 11 (in fig. 4) that operates on a suitably perforated sheet metal.

As is better seen in figure 4, which shows the metal element 3 and the shaped body 2 before they are assembled, the recessed parts of the metal element are intended to be situated housed within seats 7 of the shaped body.

The seats 7 of the shaped body have a shape preferably similar, geometrically, to that of the recessed parts. In this case, therefore, the seats also have walls of frustoconical shape comprised between a third 7 and fourth edge 8, while from the upper base 9 of each seat 7, a cylindrical element projects that constitutes and is made of the same material as the shaped body; such cylindrical element, suitably deformed by a punch 11, will come to form a mushroom 12 that, together with all the others (see fig. 5), constrains the shaped body to the metal element.

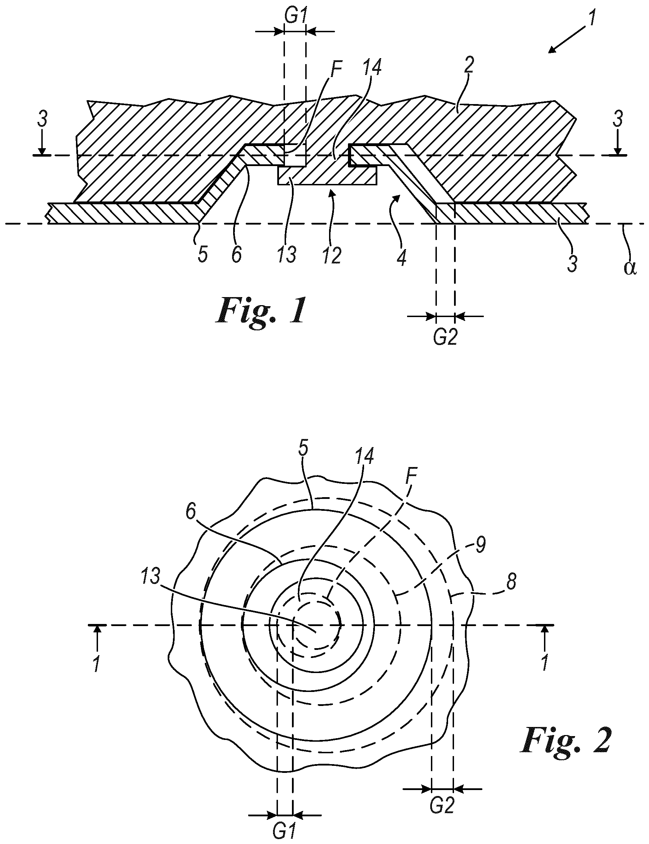

It is seen in figure 1 that after the deformation, the mushroom 12, and specifically its head 13, projects from the hole and covers the perimeter thereof, so as to constrain the metal element to the shaped body. The stalk of the mushroom lies instead within the hole F.

According to the present invention, between the walls of the shaped body which define the seats 7 and at least some (preferably all) of said recessed parts 4 and between the walls which define said holes F and at least some (preferably all) of the stalks 14 of said mushrooms, a clearance is present (G1, G2).

In the described embodiment, the clearance (which is very clearly seen in the section of figure 3) is obtained by making the hole F with a diameter considerably greater than that of the respective stalk 14, and the seat 7 with considerably greater than the diameter of the respective recessed part 4.
It must be noted that, in the described embodiment, and with particular reference to figures 1, 2 and 3, the hole F and the relevant stem 14 are arranged in a mutually eccentric position. In detail, the stem 14 is in tangent contact with the hole F. The slack G1 is thus variable, since it is absent at the contact point and is at its peak in the diametrally opposed position.

Likewise, the seat 7 and the relevant recessing portion 4 are arranged in a mutually eccentric position. In detail, the seat 7 is in tangent contact with the recessing portion 4 at a contact line. The slack G2 as well is thus variable, since it is absent at the contact line and is at its peak in the diametrally opposed position.

Accordingly, in both cases dilatation mainly occurs along the direction of the highest slack.

It is extremely advantageous (and inexpensive) to make the seat and recess with circular plan, but nothing prohibits selecting plans with another geometric shape.

Thus, merely by way of example, it is possible to use a circular plan for the recessed parts, and a slot plan for the seats 7.

Likewise, the shape of the stalk of the mushroom can remain circular, while the plan of the hole can be a slot.

Advantageously, the size of the clearances increases from the center C of the vessel, where it may also be zero or substantially zero, to the periphery, where it has a value such to allow a maximum travel of 0.5 mm for every 100 mm of distance from the center.

If it is provided to make some couplings without clearance, these will preferably be those made in proximity to the center of the vessel. Such couplings without clearance allow maintaining the shaped body and the metal element mutually locked in specific position, even in cold conditions.

It is of course possible that couplings lacking clearance are present in other positions of the bottom, even if the presence and position of such couplings lacking clearance must be designed in an optimal manner so as to prevent them from causing the deformation of the bottom.

As clearance size, it is intended in such context the maximum travel that is allowed at that point for the shaped body with respect to the metal element. Advantageously the clearance is comprised between 0.05 mm and 1.2 mm.

The abovementioned number values refer to an aluminum-steel coupling, main object of the finding, and can have different values as a function of the thermal expansion differential at 400°C from among the metals used in the coupling.

In the described case, in which both the hole F and the seats 7 have circular extension, the maximum clearance is given by the lowest value between the difference of the diameter of the hole F and the diameter of the stalk of the mushroom G1 positioned therein, or between the diameter of the seat 7 and the diameter of the recessed part 4 arranged in the seat in the surface of least distance from among the latter.

It is observed that the recessed surfaces have a maximum distance from the support surface a that is conveniently less than 2 mm.

The perimeter walls which define the recessed parts are tilted with respect to the support surface. Advantageously, the angle between the perimeter walls and the support surface is 90° or as close as possible to 90°, even if in the drawing, for description purposes, it is less accentuated. In any case, it can be advantageously comprised between 60° and 90° degrees.

The metal element 3, upon completed coupling, presents itself as a shaped plate 3 provided with a plurality of recessed parts. In some (or in all) of the recessed parts, the riveted head of the mushroom is present.

The bond between the metal element and the shaped body is ensured by the effective riveting of the head of the mushroom on the perimeter edges of the hole.

In cold conditions, the contact between the head of the mushroom and the perimeter edges is quite close, and the locking of the shaped body to the plate is very stable.

When the vessel is heated during use, the stalk of the mushroom is slightly expanded, lowering the pressure of the head of the mushroom on the edges of the holes, and therefore a sliding of the shaped body is possible with respect to the metal element, thus preventing the cooking surface of the shaped body from being deformed, bent/curved.

The surfaces that are raised with respect to the support surface can conveniently be painted a dark color or the like in order to increase the infrared radiation thermal absorption properties of the conventional halogen ceramic glass surfaces or electric heating surfaces.

In addition to this technical benefit, the use of this measure allows obtaining particular aesthetic finishes, which are particularly pleasing especially if the support surface lacks painting; in fact the paint can be easily removed from the support surface, with simple mechanical grinding processing.

As seen in figure 5, the metal element 3 is preferably made of a single flat plate made of ferritic steel.

Advantageously, at the center of the plate/disc, a central hole 30 is made that can be used as a window for affixing, to the aluminum body, logos or trademarks impressed directly on the body itself.

The central hole 30 thus obtained can conveniently act as a centering element in the coupling of the pieces inside a pressing mold.

The holes F conveniently have a diameter comprised between 3 mm and 8 mm.

The method for obtaining the described container provides for pre-shaping the shaped body and the metal element independently, making them assume, at least in proximity to the bottom, a configuration like that shown in figure 4. Subsequently, the two components are coupled within a suitable mold, which has on its bottom punches 11, adapted to rivet and create the mushroom heads, and to possibly shape the perforated plate 3 if this has not already been pre-deformed.

Different embodiments have been described, but others can be conceived by exploiting the same innovative concept as defined in the claims.

## Claims

1. Vessel for cooking food on induction or conventional surfaces, comprising a shaped body (2) with a surface that defines a volume for containing food during cooking, and a metal element (3) arranged on the bottom of the vessel, the metal element (3) defining a support surface (α) for the vessel, and having a plurality of parts (4) that are recessed with respect to said support surface (α) in which through holes (F) are made, the recessed parts (4) of the metal element (3) being housed within seats (7) of the shaped body (2), at least one part of said holes (F) having at its interior a mushroom-shaped portion (12) of the shaped body (2), in a manner so as to project from the hole (F) and cover the perimeter thereof, so as to constrain the metal element (3) to the shaped body (2), whereby between the walls of the shaped body (2) which define said seats (7) and at least some of said recessed parts (4) and between the walls which define said holes (F) and at least some of the stalks (14) of said mushrooms (12), a clearance (G1, G2) is present.

2. Vessel according to the preceding claim wherein between the walls of the shaped body (2) which define said seats (7) and all said recessed parts (4) and between the walls which define said holes (F) and all the stalks (14) of said mushrooms (12), a clearance (G1, G2) is present.

3. Vessel according to the preceding claim wherein said clearance (G1, G2) is comprised between 0.05 mm and 1.2 mm.

4. Vessel according to one or more of the preceding claims wherein the metal element (3) is made of a ferromagnetic material, and is preferably obtained directly by means of cutting from sheet metal.

5. Vessel according to claim 1, wherein the size of said clearance (G1, G2) increases from one part of the vessel, preferably from its center, where it is zero or substantially zero, to the periphery, where it has a value such to allow a maximum travel of 0.5 mm for every 100 mm of distance from said part.

6. A vessel according to claim 1, wherein the amount of said clearance (G1, G2) increases from one part of the vessel, preferably from its center, where it is zero or substantially zero, to the periphery.

7. Vessel according to one or more of the preceding claims wherein the hole (F) and/or the stalk (14) of said mushrooms (12) have circular plan.

8. Vessel according to the preceding claim wherein the diameter of said hole (F) is greater than the diameter of said stalk (14).

9. Vessel according to one or more of the preceding claims wherein said seat and said recessed part (4) have circular plan.

10. Vessel according to the preceding claim wherein the diameter of said seat is greater than the diameter of said recessed part (4).

## Patentansprüche

1. Behälter zum Kochen von Nahrungsmitteln auf Induktionsflächen oder konventionellen Flächen, umfassend einen Formkörper (2) mit einer beim Kochen ein Volumen zum Enthalten von Nahrungsmitteln bildenden Oberfläche, sowie ein auf dem Boden des Behälters angeordnetes Metallelement (3), wobei das Metallelement (3) eine Stützfläche (α) für den Behälter bildet und eine Vielzahl von relativ zu der genannten Stützfläche (α) vertieften Teilen (4) hat, worin Durchgangslöcher (F) gebohrt werden, wobei die vertieften Teile (4) des Metallelementes (3) in Sitzen (7) des Formkörpers (2) aufgenommen sind, wobei mindestens ein Teil der genannten Löcher (F) im Inneren eine derartige pilzförmige Portion (12) des Formkörpers (2) haben, dass sie aus dem Loch (F) herausragt und den Umfang davon deckt, um das Metallelement (3) an dem Formkörper (2) zu fixieren, wobei zwischen den die genannten Sitze (7) bildenden Wänden des Formkörpers (2) und mindestens einigen der genannten vertieften Teilen (4) sowie zwischen den die genannten Löcher (F) bildenden Wänden und mindestens einigen der Stiele (14) der genannten Pilzen (12) ein Zwischenraum (G1, G2) vorhanden ist.

2. Behälter nach dem vorhergehenden Anspruch, worin zwischen den die genannten Sitze (7) bildenden Wänden des Formkörpers (2) und den gesamten genannten vertieften Teilen (4) sowie zwischen den die genannten Löcher (F) bildenden Wänden und den gesamten Stielen (14) der genannten Pilzen (12) ein Zwischenraum (G1, G2) vorhanden ist.

3. Behälter nach dem vorhergehenden Anspruch, worin der genannte Zwischenraum (G1, G2) im Bereich von 0,05 mm bis 1,2 mm liegt.

4. Behälter nach einem oder mehreren der vorhergehenden Ansprüche, worin das Metallelement (3) aus ferromagnetischem Werkstoff besteht und vorzugsweise unmittelbar durch Schneiden aus Metallblech hergestellt wird.

5. Behälter nach Anspruch 1, worin die Größe des genannten Zwischenraums (G1, G2) von einer Seite des Behälters, vorzugsweise dessen Mitte, worin sie null oder im wesentlichen null ist, bis zum Rand, worin sie einen derartigen Wert hat, dass sie einen maximalen Weg von 0,5 mm für jede 100-mm-Abstand von der genannten Seite erlaubt, steigert.

6. Behälter nach Anspruch 1, worin der Betrag des genannten Zwischenraums (G1, G2) von einer Seite des Behälters, vorzugsweise dessen Mitte, worin sie null oder im wesentlichen null ist, bis zum Rand steigert.

7. Behälter nach einem oder mehreren der vorhergehenden Ansprüche, worin das Loch (F) und/oder der Stiel (14) der genannten Pilzen (12) einen kreisförmigen Grundriss haben.

8. Behälter nach dem vorhergehenden Anspruch, worin der Durchmesser des genannten Lochs (F) größer als der Durchmesser des genannten Stiels (14) ist.

9. Behälter nach einem oder mehreren der vorhergehenden Ansprüche, worin der genannte Sitz und der genannte vertiefte Teil (4) einen kreisförmigen Grundriss haben.

10. Behälter nach dem vorhergehenden Anspruch, worin der Durchmesser des genannten Sitzes größer als der Durchmesser des genannten vertieften Teils (4) ist.

## Revendications

1. Récipient pour la cuisson d'aliments sur des surfaces à induction ou conventionnelles, comprenant un corps façonné (2) avec une surface définissant un volume pour contenir les aliments pendant la cuisson et un élément de métal (3) agencé sur le fond du récipient, l'élément de métal (3) définissant une surface de soutien (α) pour le récipient et ayant une pluralité de parties (4) renfoncées par rapport à ladite surface de soutien (α) où des trous traversants (F) sont formés, les parties renfoncées (4) de l'élément de métal (3) étant logées à l'intérieur de sièges (7) du corps façonné (2), au moins une partie desdits trous (F) ayant à son intérieur une portion en forme di champignon (12) du corpos façonné (2), de sorte à faire saillie du trou (F) et à revêtir son périmètre, de sorte que l'élément de métal (3) est contraint au corps façonné (2), où entre les parois du corps façonné (2) définissant lesdits sièges (7) et au moins certaines desdites parties renfoncées (4) et entre les parois définissant lesdits trous (F) et au moins certaines des tiges (14) desdits champignons (12), un jeu (G1, G2) est présent.

2. Récipient selon la revendication précédente, où entre les parois du corps façonné (2) définissant lesdits sièges (7) et toutes lesdites parties renfoncées (4) et entre les parois définissant lesdits trous (F) et toutes les tiges (14) desdits champignons (12), un jeu (G1, G2) est présent.

3. Récipient selon la revendication précédente, où ledit jeu (G1, G2) est compris entre 0,05 mm et 1,2 mm.

4. Récipient selon l'une ou plusieurs des revendications précédentes, où l'élément de métal (3) est réalisé en matériau ferromagnétique et est préférablement obtenu directement en coupant des feuilles de métal.

5. Récipient selon la revendication 1, où la dimension dudit jeu (G1, G2) augmente à partir d'une partie du récipient, préférablement de son centre, où il mesure zéro ou substantiellement zéro, jusqu'à la périphérie, où il a une valeur telle à consentir une course maximale de 0,5 mm pour tous les 100 mm de distance de ladite partie.

6. Récipient selon la revendication 1, où la quantité dudit jeu (G1, G2) augmente à partir d'une partie du récipient, préférablement de son centre, où il mesure zéro ou substantiellement zéro, jusqu'à la périphérie.

7. Récipient selon l'une ou plusieurs des revendications précédentes, où le trou (F) et/ou la tige (14) desdits champignons (12) ont une plante circulaire.

8. Récipient selon la revendication précédente, où le diamètre dudit trou (F) est supérieur au diamètre de ladite tige (14).

9. Récipient selon l'une ou plusieurs des revendications précédentes, où ledit siège et la dite partie renfoncée (4) ont une plante circulaire.

10. Récipient selon la revendication précédente, où le diamètre dudit siège est supérieur au diamètre de ladite partie renfoncée (4).
